# EUROPEAN PATENT APPLICATION

(11) **EP 4 625 913 A1**
(43) Date of publication of application: **01.10.2025**
(21) Application number: 22968831.2
(22) Date of filing: 20.12.2022
(51) Int. Cl.: H04L 27/00

(54) **COMMUNICATION METHOD, COMMUNICATION APPARATUS AND COMMUNICATION SYSTEM**

(71) Applicant: Huawei Technologies Co., Ltd., Shenzhen, Guangdong 518129 (CN)
(72) Inventor: LI, Liang, Shenzhen, Guangdong 518129 (CN); DONG, Xuhui, Shenzhen, Guangdong 518129 (CN); HU, Xiaoqun, Shenzhen, Guangdong 518129 (CN)
(74) Representative: Gill Jennings & Every LLP
(86) International application number: PCT/CN2022/140222
(87) International publication number: WO 2024/130528

(57) **Abstract**

Embodiments of this application provide a communication method, a communication apparatus, and a communication system. The method includes: sending first data to a first apparatus based on a first power aggregation capability of the first apparatus; receiving feedback information from the first apparatus; and sending second data to the first apparatus based on a second power aggregation capability of the first apparatus, where the second power aggregation capability is determined based on the feedback information and the first power aggregation capability. In the solutions, a power aggregation capability of the first apparatus is dynamically adjusted based on the feedback information of the first apparatus, so that the power aggregation capability of the first apparatus can be determined properly. This helps improve utilization of transmit power of the first apparatus while ensuring that the first apparatus works properly.

## Description

### TECHNICAL FIELD

Embodiments of this application relate to the field of wireless communication technologies, and in particular, to a communication method, a communication apparatus, and a communication system.

### BACKGROUND

When a device sends data, a maximum transmit power of the device cannot be exceeded, that is, a sum of transmit powers of unit resources carrying data cannot exceed the maximum transmit power of the device.

To fully utilize transmit power of the device, data is usually sent at a transmit power close to the maximum transmit power of the device during actual sending.

Therefore, how to improve utilization of the transmit power of the device is an important issue.

### SUMMARY

Embodiments of this application provide a communication method, a communication apparatus, and a communication system, to improve utilization of transmit power of a device.

According to a first aspect, an embodiment of this application provides a communication method. The method may be performed by a second apparatus or a module (for example, a chip) in a second apparatus. The method includes: sending first data to a first apparatus based on a first power aggregation capability of the first apparatus; receiving feedback information from the first apparatus; and sending second data to the first apparatus based on a second power aggregation capability of the first apparatus, where the second power aggregation capability is determined based on the feedback information and the first power aggregation capability.

In the foregoing solution, a power aggregation capability of the first apparatus is dynamically adjusted based on the feedback information of the first apparatus, so that the power aggregation capability of the first apparatus can be determined properly. This helps improve utilization of transmit power of the first apparatus while ensuring that the first apparatus works properly.

In a possible implementation method, the first power aggregation capability is received from the first apparatus, where the first power aggregation capability is an initial power aggregation capability of the first apparatus.

In the foregoing solution, the first apparatus reports the initial power aggregation capability of the first apparatus. This helps a second apparatus determine a more appropriate power aggregation capability for the first apparatus based on the initial power aggregation capability.

In a possible implementation method, the first power aggregation capability is a default initial power aggregation capability of the first apparatus.

In the foregoing solution, the initial power aggregation capability of the first apparatus is default. Therefore, the first apparatus does not need to report the initial power aggregation capability to the second apparatus. This helps reduce signaling overheads.

In a possible implementation method, the feedback information includes at least one of the following information:
status information of the first apparatus, where the status information indicates a working status of the first apparatus, and the working status is normal or alarm;
indicator information of the first apparatus, where the indicator information includes at least one of a missed clipping rate for crest factor reduction (crest factor reduction, CFR), a digital predistortion (digital predistortion, DPD) convergence status, or an error vector magnitude (error vector magnitude, EVM) value; or
indication information, where the indication information indicates to increase or decrease the power aggregation capability of the first apparatus.

In the foregoing solution, the first apparatus accurately reports the working status of the first apparatus to the second apparatus by using the feedback information, so that the second apparatus can accurately determine, based on the feedback information, a manner for adjusting the power aggregation capability of the first apparatus. This helps determine an appropriate power aggregation capability.

In a possible implementation method, if the feedback information includes the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or if the feedback information includes the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

In a possible implementation method, if the feedback information includes the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or if the feedback information includes the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, where the first condition includes at least one of the following: the missed clipping rate in CFR is less than a missed clipping rate threshold, the DPD convergence status is converged, or the EVM value is less than an EVM threshold.

In a possible implementation method, if the feedback information includes the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or if the feedback information includes the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

In a possible implementation method, if both the first data and the second data are data of a first service, a correspondence is established, based on characteristic information of the first service, between the second power aggregation capability and the characteristic information.

In the foregoing solution, after the second apparatus establishes the correspondence between the second power aggregation capability and the characteristic information of the first service, when the second apparatus sends data of the first service later, the second apparatus obtains a corresponding power aggregation capability (that is, the second power aggregation capability) of the first apparatus based on the characteristic information of the first service, and then sends the data of the first service by using the second power aggregation capability, with no need to dynamically adjust the power aggregation capability of the first apparatus. In this way, power consumption and resource overheads caused by dynamic adjustment can be reduced for the first apparatus and the second apparatus, and service life shortening or even damage resulting from frequent alarms caused by dynamic adjustment can be prevented for the first apparatus.

In a possible implementation method, the characteristic information of the first service includes one or more of the following: a distribution characteristic of the data of the first service in frequency domain, or a power distribution corresponding to the data of the first service.

In a possible implementation method, the feedback information is received based on a periodicity or received based on event-based triggering.

According to a second aspect, an embodiment of this application provides a communication method. The method may be performed by a first apparatus or a module (for example, a chip) in a first apparatus. The method includes: receiving first data from a second apparatus, where the first data corresponds to a first power aggregation capability of a first apparatus; and sending feedback information to the second apparatus, where the feedback information reflects a working status of the first apparatus when a power aggregation capability of the first apparatus is the first power aggregation capability.

In the foregoing solution, the power aggregation capability of the first apparatus is dynamically adjusted based on the feedback information of the first apparatus, so that the power aggregation capability of the first apparatus can be determined properly. This helps improve utilization of transmit power of the first apparatus while ensuring that the first apparatus works properly.

In a possible implementation method, the first power aggregation capability is sent to the second apparatus, where the first power aggregation capability is an initial power aggregation capability of the first apparatus.

In the foregoing solution, the first apparatus reports the initial power aggregation capability of the first apparatus. This helps the second apparatus determine a more appropriate power aggregation capability for the first apparatus based on the initial power aggregation capability.

In a possible implementation method, the first power aggregation capability is a default initial power aggregation capability of the first apparatus.

In the foregoing solution, the initial power aggregation capability of the first apparatus is default. Therefore, the first apparatus does not need to report the initial power aggregation capability to the second apparatus. This helps reduce signaling overheads.

In a possible implementation method, second data is received from the second apparatus, where the second data corresponds to a second power aggregation capability of the first apparatus, and the second power aggregation capability is determined based on the feedback information and the first power aggregation capability.

In a possible implementation method, the feedback information includes at least one of the following information:
status information of the first apparatus, where the status information indicates the working status of the first apparatus;
indicator information of the first apparatus, where the indicator information includes at least one of a missed clipping rate in CFR, a DPD convergence status, or an EVM value; or
indication information, where the indication information indicates to increase or decrease the power aggregation capability of the first apparatus.

In the foregoing solution, the first apparatus accurately reports the working status of the first apparatus to the second apparatus by using the feedback information, so that the second apparatus can accurately determine, based on the feedback information, a manner for adjusting the power aggregation capability of the first apparatus. This helps determine an appropriate power aggregation capability.

In a possible implementation method, if the feedback information includes the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or if the feedback information includes the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

In a possible implementation method, if the feedback information includes the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or if the feedback information includes the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, where the first condition includes at least one of the following: the missed clipping rate in CFR is less than a missed clipping rate threshold, the DPD convergence status is converged, or the EVM value is less than an EVM threshold.

In a possible implementation method, if the feedback information includes the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or if the feedback information includes the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

In a possible implementation method, when start time of each period arrives, the feedback information is sent to the second apparatus.

In a possible implementation method, when the working status of the first apparatus changes, the feedback information is sent to the second apparatus.

According to a third aspect, an embodiment of this application provides a communication apparatus. The apparatus may be a second apparatus or a module (for example, a chip) in a second apparatus. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a first apparatus or a module (for example, a chip) in a first apparatus. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect and the second aspect.

According to a sixth aspect, an embodiment of this application provides a communication apparatus, including a unit or a means (means) configured to perform the steps of any implementation method of the first aspect and the second aspect.

According to a seventh aspect, an embodiment of this application provides a communication apparatus, including a processor and an interface circuit. The processor is configured to: communicate with another apparatus through the interface circuit, and perform any implementation method of the first aspect and the second aspect. There are one or more processors.

According to an eighth aspect, an embodiment of this application provides a communication apparatus, including a processor coupled to a memory. The processor is configured to invoke a program stored in the memory, to perform any implementation method of the first aspect and the second aspect. The memory may be located inside or outside the apparatus, and there may be one or more processors.

According to a ninth aspect, an embodiment of this application further provides a computer-readable storage medium. The computer-readable storage medium stores instructions. When the instructions are run on a communication apparatus, any implementation method of the first aspect and the second aspect is performed.

According to a tenth aspect, an embodiment of this application further provides a computer program product. The computer program product includes a computer program or instructions. When the computer program or the instructions are run by a communication apparatus, any implementation method of the first aspect and the second aspect is performed.

According to an eleventh aspect, an embodiment of this application further provides a chip system, including a processor, configured to perform any implementation method of the first aspect and the second aspect.

According to a twelfth aspect, an embodiment of this application further provides a communication system, including a second apparatus configured to perform any implementation method of the first aspect, and a first apparatus configured to perform any implementation method of the second aspect.

### BRIEF DESCRIPTION OF DRAWINGS

FIG. 1(a) is a diagram of a possible nonrestrictive system;
FIG. 1(b) is a diagram of an access network device;
FIG. 1(c) is a diagram of a communication system according to an embodiment of this application;
FIG. 2(a) is a diagram of an example of a power distribution in a case of non-power aggregation according to an embodiment of this application;
FIG. 2(b) is a diagram of another example of a power distribution in a case of non-power aggregation according to an embodiment of this application;
FIG. 2(c) is a diagram of an example of a power distribution in a case of power aggregation according to an embodiment of this application;
FIG. 3 is a diagram of a communication method according to an embodiment of this application;
FIG. 4 is a diagram of an example of a power distribution in a case of power aggregation according to an embodiment of this application;
FIG. 5 is a diagram of a communication apparatus according to an embodiment of this application; and
FIG. 6 is a diagram of a communication apparatus according to an embodiment of this application.

### DESCRIPTION OF EMBODIMENTS

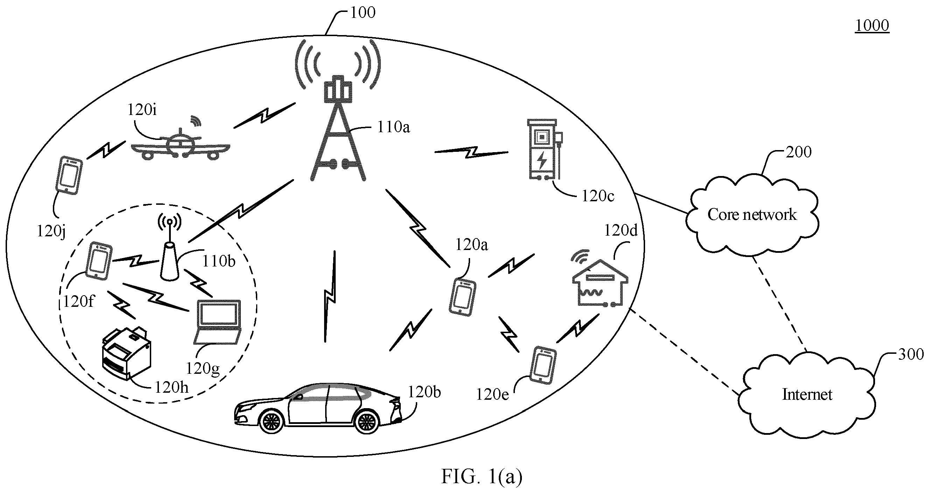

FIG. 1(a) is a diagram of a possible nonrestrictive communication system. As shown in FIG. 1(a), the communication system 1000 includes a radio access network (radio access network, RAN) 100, a core network (core network, CN) 200, and an Internet 300. The RAN 100 includes at least one RAN node (for example, a 110a and a 110b in FIG. 1(a), which are collectively referred to as 110) and at least one terminal (for example, a 120a to a 120j in FIG. 1(a), which are collectively referred to as 120). The RAN 100 may further include another RAN node, for example, a wireless relay device and/or a wireless backhaul device (not shown in FIG. 1(a)). A terminal 120 is connected to a RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of a core network and a logical function of a radio access network.

The RAN 100 may be a cellular system related to the 3^{rd} generation partnership project (3^{rd} generation partnership project, 3GPP), for example, a 4^{th} generation (4^{th} generation, 4G) or 5^{th} generation (5^{th} generation, 5G) mobile communication system, or a future-oriented evolved system (for example, a 6^{th} generation (6^{th} generation, 6G) mobile communication system). The RAN 100 may alternatively be an open access network (open RAN, O-RAN, or ORAN) or a wireless fidelity (wireless fidelity, Wi-Fi) system. The RAN 100 may alternatively be a communication system that integrates the foregoing two or more systems.

The RAN node 110 may sometimes also be referred to as an access network device, a RAN entity, an access node, or the like, is part of a communication system, and is configured to help a terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1(a) may be a helicopter or an uncrewed aerial vehicle, and the network element 120i may be configured as a mobile base station. For the terminal 120j that is connected to the RAN 100 by using the network element 120i, the network element 120i is a base station. However, for the base station 110a, the network element 120i is a terminal. The RAN node 110 and the terminal 120 are sometimes both referred to as communication apparatuses. For example, in FIG. 1(a), the network elements 110a and 110b may be understood as communication apparatuses that have a function of a base station, and the network elements 120a to 120j may be understood as communication apparatuses that have a function of a terminal.

In a possible scenario, a RAN node may be a base station (base station), an evolved NodeB (evolved NodeB, eNodeB), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, the 110a in FIG. 1(a)), a micro base station or an indoor station (for example, the 110b in FIG. 1(a)), a relay node or a donor node, or a radio controller in a cloud radio access network (cloud radio access network, CRAN) scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU).

In another possible scenario, a plurality of RAN nodes collaborate to assist a terminal in implementing radio access, and different RAN nodes separately implement some functions of a base station. For example, a RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, be included in a remote radio unit (remote radio unit, RRU), a remote radio head (remote radio head, RRH), or an active antenna unit (active antenna unit, AAU).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination thereof.

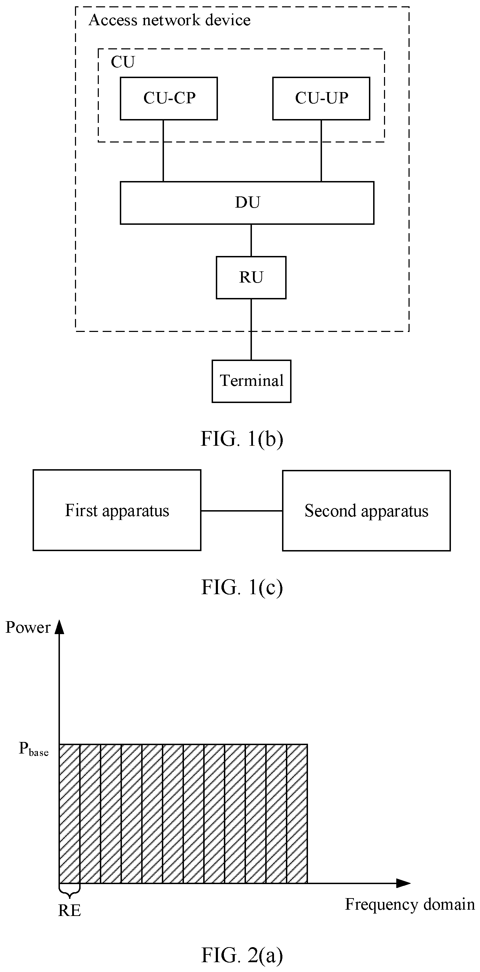

FIG. 1(b) is a diagram of an access network device. As shown in FIG. 1(b), the access network device includes one or more CUs, one or more DUs, and one or more radio units (radio unit, RU). For clarity, FIG. 1(b) shows only one CU, one DU, and one RU. The CU is configured to connect to a core network and the one or more DUs. Optionally, the CU may have some functions of a core network. The CU may include a CU-CP and a CU-UP.

The CU and the DU may be configured based on functions that are of protocol layers of a wireless network and that are to be implemented by the CU and the DU. For example, the CU is configured to implement functions of a packet data convergence protocol (packet data convergence protocol, PDCP) layer and a higher protocol layer (for example, a radio resource control (radio resource control, RRC) layer and/or a service data adaptation protocol (service data adaptation protocol, SDAP) layer), and the DU is configured to implement functions of a protocol layer lower than the PDCP layer (for example, a radio link control (radio link control, RLC) layer, a medium access control (medium access control, MAC) layer, and/or a physical (physical, PHY) layer). For another example, the CU is configured to implement functions of a protocol layer higher than a PDCP layer (for example, an RRC layer and/or an SDAP layer), and the DU is configured to implement functions of the PDCP layer and a lower protocol layer (for example, an RLC layer, a MAC layer, and/or a PHY layer).

The foregoing configurations of the CU and the DU are merely examples. Alternatively, functions of the CU and the DU may be configured depending on a requirement. For example, the CU or the DU may be configured to have functions of more protocol layers, or the CU or the DU may be configured to have some processing functions of a protocol layer. For example, some functions of an RLC layer and functions of a protocol layer higher than the RLC layer are set on the CU, and remaining functions of the RLC layer and functions of a protocol layer lower than the RLC layer are set on the DU. For another example, functions may be split between the CU and the DU based on service types or other system requirements. For example, a split is performed based on a latency. A function whose processing time needs to satisfy a low latency requirement is set on the DU, and a function whose processing time does not need to satisfy the latency requirement is set on the CU.

The DU and the RU may work together to jointly implement functions of the PHY layer. One DU may be connected to the one or more RUs. Functions of the DU and the RU may be configured in a plurality of manners according to designs. For example, the DU is configured to implement a baseband function, and the RU is configured to implement an intermediate radio frequency function. For another example, the DU is configured to implement higher-layer functions of the PHY layer, and the RU is configured to: implement lower-layer functions of the PHY layer, or implement the lower-layer functions and a radio frequency function. The higher-layer functions of the physical layer may include some functions of the physical layer, and these functions are closer to the MAC layer. The lower-layer functions of the physical layer may include other functions of the physical layer, and these functions are closer to an intermediate radio frequency side.

FIG. 1(c) is a diagram of a communication system according to an embodiment of this application. The communication system includes a first apparatus and a second apparatus. Specific forms of the first apparatus and the second apparatus are not limited in this embodiment of this application.

For example, the first apparatus is any one of an RU, an RRU, or an AAU, the second apparatus is any one of a CU, a DU, or a BBU, and the first apparatus and the second apparatus are two different apparatuses.

For example, when the first apparatus communicates with the second apparatus by using an optical fiber, an interface between the first apparatus and the second apparatus may be a common public radio interface (common public radio interface, CPRI), an enhanced common public radio interface (enhanced CPRI, eCPRI), a fronthaul interface, or the like.

For example, when radio communication is performed between the first apparatus and the second apparatus, an interface between the first apparatus and the second apparatus may be a 4G air interface, a 5G air interface, a 6G air interface, or the like.

In a non-power aggregation scenario, a maximum transmit power on a unit resource is fixed, and a sum of actual transmit powers on unit resources does not exceed a maximum transmit power of a device. The unit resource herein may be a resource block (resource block, RB) or a resource element (resource element, RE), where one RB includes 12 REs. For ease of description, an RE is used as an example of a unit resource for description in the following. FIG. 2(a) is a diagram of an example of a power distribution in a case of non-power aggregation according to an embodiment of this application. In this example, it is assumed that a maximum transmit power of a device is *Pₜₒₜₐₗ*, and a total bandwidth is 100M (M). Because 100M corresponds to 273 RBs and each RB includes 12 REs, 100M corresponds to 273×12 REs. A "reference power" *P_{base}* is defined as an average transmit power for sending signals (or data) on each RE by the device: *P_{base} = Pₜₒₜₐₗ*/(273 × 12). In a non-power aggregation scenario, a maximum transmit power *Pₘₐₓ* for sending signals (or data) on each RE by the device is the "reference power", that is, *Pₘₐₓ = P_{base}.* FIG. 2(a) shows a scenario of full-power sending by the device. In this scenario, the device sends data on each RE at the transmit power *P_{base}.*

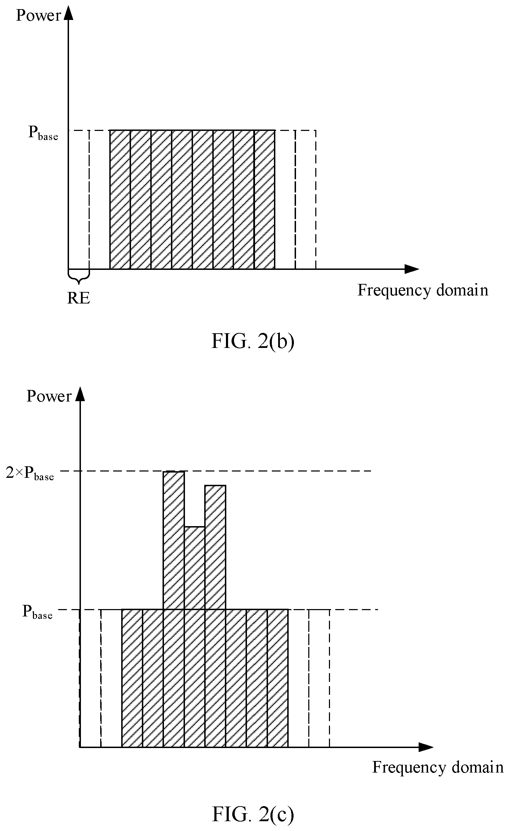

In the non-power aggregation scenario, if the device sends data on each RE at the reference power *P_{base}* in a case of full-bandwidth scheduling, the device sends data at the maximum transmit power (or a full power). In this case, transmit power of the device may be fully utilized. However, in an actual service situation, data is not always sent at a full bandwidth. In some scenarios, there may be no data that needs to be sent on some REs. In this case, data is still sent on other REs that carry data, at the reference power of the REs. As a result, a large amount of remaining power of the device cannot be fully utilized. FIG. 2(b) is a diagram of another example of a power distribution in a case of non-power aggregation according to an embodiment of this application. Based on FIG. 2(a), this example shows a scenario in which no data needs to be sent on some REs (REs shown in dashed-line boxes in the figure). In this scenario, maximum transmit powers on other REs that carry data (shaded REs) are still *P_{base}.* As a result, an actual total transmit power of a device is less than or far less than *Pₜₒₜₐₗ.* Therefore, transmit power of the device cannot be fully utilized.

To fully utilize transmit power of a device, this application provides a power aggregation (power aggregation, PA) solution. To be specific, on the premise that a maximum transmit power of the device is not exceeded, maximum transmit powers for sending signals (or data) on some REs by the device are increased, so that remaining power of the device can be fully utilized. FIG. 2(c) is a diagram of an example of a power distribution in a case of power aggregation according to an embodiment of this application. In this example, when some REs do not carry data, power saved by these REs may be used to increase transmit powers of other REs that carry data. For example, in FIG. 2(c), a maximum transmit power *Pₘₐₓ* for sending signals (or data) on a part of REs by a device may reach 2 × *P_{base}*, and a total transmit power of the device still does not exceed *Pₜₒₜₐₗ.*

A power aggregation capability of the device is defined as a ratio of the maximum transmit power *Pₘₐₓ* for sending signals (or data) on each RE by the device to the "reference power" *P_{base},* and is usually represented by a value in decibel (dB) domain, that is, power aggregation capability=10 × lg (*Pₘₐₓ*/*P_{base}*). For example, in the example in FIG. 2(c), when a power aggregation capability of the device is 3 dB, it indicates that a maximum transmit power *Pₘₐₓ* for sending signals (or data) on each RE by the device may be increased from *P_{base}* to 2 × *P_{base},* that is, 10 × lg (2 × *P_{base}*/*P_{base}*)=3 dB.

When the device has the power aggregation capability, the following benefits can be brought about.
(1) Coverage improvement: Because beams are designed independently for different channels, beam gains and demodulation capabilities are different for the different channels, resulting in different coverage capabilities of the different channels. Power aggregation can improve coverage capabilities of some channels.
(2) Coverage compensation: When beams are widened because various functions/features take effect, beam coverage deteriorates. Power aggregation can compensate for coverage loss of some beams.
(3) Experience improvement: For sending of a common service, power aggregation can increase a downlink experience rate.

Power aggregation can bring about the foregoing benefits. However, an inappropriate power aggregation capability setting may cause performance deterioration of the device. For example, if the power aggregation capability of the device is set to a large value, there may be a large quantity of burst peaks of service data, and the device cannot perform clipping in a timely manner. Consequently, signal distortion occurs, affecting air interface performance; and a peak missed during clipping may have adverse impact on an analog device such as a power amplifier, thereby affecting a service life of the device or even causing damage to the device. To ensure normal use of the device, a manner of setting the power aggregation capability of the device is to set a fixed and conservative power aggregation capability, so as to ensure that the device can work properly in various service scenarios and performance of the device does not deteriorate.

However, the foregoing power aggregation capability setting manner may result in a case that the transmit power of the device still cannot be fully utilized, that is, after power aggregation, a sum of actual transmit powers of the REs is still less than or far less than the maximum transmit power of the device. Therefore, how to further improve utilization of the transmit power of the device is to be resolved.

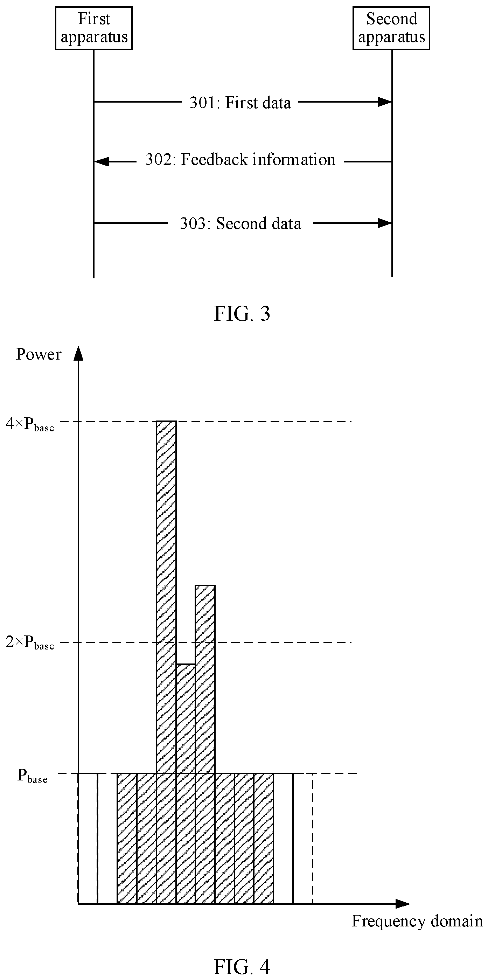

FIG. 3 is a schematic flowchart of a communication method according to an embodiment of this application. The method may be used to improve utilization of transmit power of a first apparatus. The first apparatus is an example of the foregoing device.

The method includes the following steps.

Step 301: A second apparatus sends first data to a first apparatus based on a first power aggregation capability of the first apparatus.

For the first apparatus and the second apparatus, refer to the descriptions of the first apparatus and the second apparatus shown in FIG. 1(c), respectively.

In an implementation method, if the first power aggregation capability is an initial power aggregation capability of the first apparatus, the first apparatus may send the first power aggregation capability to the second apparatus before step 301.

In another implementation method, the first power aggregation capability is a default initial power aggregation capability of the first apparatus.

For example, the first power aggregation capability may be 0 dB by default.

That the second apparatus sends the first data to the first apparatus based on the first power aggregation capability of the first apparatus means that when sending the first data to the first apparatus, the second apparatus controls, based on the first power aggregation capability, transmit power for data carried on each RE, so as to maximize use of transmit power of the first apparatus.

Step 302: The first apparatus sends feedback information to the second apparatus, and correspondingly, the second apparatus receives the feedback information.

The feedback information reflects a working status of the first apparatus when a power aggregation capability of the first apparatus is the first power aggregation capability, that is, a working status of the first apparatus when the second apparatus sends the first data to the first apparatus based on the first power aggregation capability. The working status is normal or alarm. For example, when a maximum transmit power that is on a unit resource and that corresponds to the first power aggregation capability is excessively large (for example, greater than a threshold 1), actual transmit powers on some REs are consequently large (for example, greater than a threshold 2). As a result, the working status of the first apparatus may be alarm (or abnormal).

In this application, the feedback information may include at least one of the following information.
(1) Status information of the first apparatus, where the status information indicates the working status of the first apparatus, and the working status is normal or alarm.
(2) Indicator information of the first apparatus, where the indicator information includes at least one of a missed clipping rate for crest factor reduction (crest factor reduction, CFR), a digital predistortion (digital predistortion, DPD) convergence status, or an error vector magnitude (error vector magnitude, EVM) value.

The missed clipping rate in CFR indicates a proportion of peaks missed during clipping performed by the first apparatus. A lower missed clipping rate in CFR indicates higher reliability of a device.

The DPD convergence status indicates an effect of suppressing out-of-band spectral leakage. When DPD converges, it indicates that the suppression effect is good. When DPD does not converge, it indicates that the suppression effect is poor.

The EVM value indicates a data distortion situation (a deviation between actual data and ideal data). A larger EVM value indicates severer data distortion, and a smaller EVM value indicates slighter data distortion.

(3) Indication information, where the indication information indicates to increase or decrease the power aggregation capability of the first apparatus.

When determining that the working status is normal, the first apparatus may send, to the second apparatus, indication information that indicates to increase the power aggregation capability of the first apparatus. When determining that the working status is alarm, the first apparatus may send, to the second apparatus, indication information that indicates to decrease the power aggregation capability of the first apparatus.

In an implementation method, the first apparatus may report the feedback information based on a preset periodicity, for example, report the feedback information once at intervals of first duration. Therefore, when start time of each period arrives, the first apparatus sends the feedback information to the second apparatus. The feedback information reflects the current working status of the first apparatus.

In another implementation method, the first apparatus may report the feedback information based on an event. For example, when the working status of the first apparatus changes (for example, from the normal state to the alarm state, or from the alarm state to the normal state), the first apparatus sends the feedback information to the second apparatus. The feedback information reflects the current working status of the first apparatus.

Step 303: The second apparatus sends second data to the first apparatus based on a second power aggregation capability of the first apparatus.

After receiving the feedback information corresponding to the first power aggregation capability, the second apparatus determines the second power aggregation capability of the first apparatus based on the feedback information and the first power aggregation capability.

In an implementation method, if the feedback information includes the status information and the status information indicates that the working status of the first apparatus is normal, the second apparatus may increase the power aggregation capability of the first apparatus by a specific step, for example, increase by 0.1 dB. Therefore, a maximum transmit power that is on a unit resource and that corresponds to an increased second power aggregation capability is greater than the maximum transmit power that is on a unit resource and that corresponds to the first power aggregation capability. The "specific step" herein may be a fixed step, or may be a dynamically changing step. This is not limited in this application. This is described herein in a unified manner, and details are not described again below. Alternatively, the second apparatus may not adjust the power aggregation capability of the first apparatus when a quantity of normal times does not reach a threshold of the quantity of normal times. In this case, a maximum transmit power that is on a unit resource and that corresponds to the second power aggregation capability is equal to the maximum transmit power that is on a unit resource and that corresponds to the first power aggregation capability. When the quantity of normal times reaches the threshold of the quantity of normal times later, the second apparatus increases the power aggregation capability of the first apparatus by a specific step. "The quantity of normal times" herein is a quantity of times of receiving indication information indicating that the working status of the first apparatus is normal. For example, if the threshold of the quantity of normal times is equal to 3, the second apparatus increases the power aggregation capability of the first apparatus by a specific step once when receiving, for every three times, the indication information indicating that the working status of the first apparatus is normal.

In another implementation method, if the feedback information includes the status information and the status information indicates that the working status of the first apparatus is alarm, the second apparatus may decrease the power aggregation capability of the first apparatus by a specific step, for example, decrease by 0.1 dB. Therefore, a maximum transmit power that is on a unit resource and that corresponds to a decreased second power aggregation capability is less than the maximum transmit power that is on a unit resource and that corresponds to the first power aggregation capability. Alternatively, the second apparatus may not adjust the power aggregation capability of the first apparatus when a quantity of alarm times does not reach a threshold of the quantity of alarm times. In this case, a maximum transmit power that is on a unit resource and that corresponds to the second power aggregation capability is equal to the maximum transmit power that is on a unit resource and that corresponds to the first power aggregation capability. When the quantity of alarm times reaches the threshold of the quantity of alarm times later, the second apparatus decreases the power aggregation capability of the first apparatus by a specific step. "The quantity of alarm times" herein is a quantity of times of receiving indication information indicating that the working status of the first apparatus is alarm. For example, if the threshold of the quantity of alarm times is equal to 3, the second apparatus decreases the power aggregation capability of the first apparatus by a specific step once when receiving, for every three times, the indication information indicating that the working status of the first apparatus is alarm.

In an implementation method, if the feedback information includes the indicator information and the indicator information meets a first condition, the second apparatus may increase the power aggregation capability of the first apparatus by a specific step, for example, increase by 0.1 dB. Therefore, a maximum transmit power that is on a unit resource and that corresponds to an increased second power aggregation capability is greater than the maximum transmit power that is on a unit resource and that corresponds to the first power aggregation capability. Alternatively, the second apparatus may not adjust the power aggregation capability of the first apparatus before a quantity of times that the indicator information reported by the first apparatus meets the first condition reaches a first threshold. In this case, a maximum transmit power that is on a unit resource and that corresponds to the second power aggregation capability is equal to the maximum transmit power that is on a unit resource and that corresponds to the first power aggregation capability. When the quantity of times that the indicator information reported by the first apparatus meets the first condition reaches the first threshold later, the second apparatus increases the power aggregation capability of the first apparatus by a specific step. An example in which the first threshold is 5 is used. In this case, when receiving, for every five times, indicator information that meets the first condition, the second apparatus increases the power aggregation capability of the first apparatus once. The first condition includes at least one of the following: the missed clipping rate in CFR is less than a missed clipping rate threshold, the DPD convergence status is converged, or the EVM value is less than an EVM threshold.

In another implementation method, if the feedback information includes the indicator information and the indicator information does not meet the first condition, the second apparatus may decrease the power aggregation capability of the first apparatus by a specific step, for example, decrease by 0.1 dB. Therefore, a maximum transmit power that is on a unit resource and that corresponds to a decreased second power aggregation capability is less than the maximum transmit power that is on a unit resource and that corresponds to the first power aggregation capability. Alternatively, the second apparatus may not adjust the power aggregation capability of the first apparatus before a quantity of times that the indicator information reported by the first apparatus does not meet the first condition reaches a first threshold. In this case, a maximum transmit power that is on a unit resource and that corresponds to the second power aggregation capability is equal to the maximum transmit power that is on a unit resource and that corresponds to the first power aggregation capability. When the quantity of times that the indicator information reported by the first apparatus does not meet the first condition reaches the first threshold later, the second apparatus decreases the power aggregation capability of the first apparatus by a specific step. An example in which the first threshold is 5 is used. In this case, when receiving, for every five times, indicator information that does not meet the first condition, the second apparatus decreases the power aggregation capability of the first apparatus once.

In an implementation method, if the feedback information includes the indication information and the indication information indicates to increase the power aggregation capability of the first apparatus, the second apparatus may increase the power aggregation capability of the first apparatus by a specific step, for example, increase by 0.1 dB. Therefore, a maximum transmit power that is on a unit resource and that corresponds to an increased second power aggregation capability is greater than the maximum transmit power that is on a unit resource and that corresponds to the first power aggregation capability. Alternatively, the second apparatus may not adjust the power aggregation capability of the first apparatus before a quantity of pieces of received indication information indicating to increase the power aggregation capability of the first apparatus reaches a second threshold. In this case, a maximum transmit power that is on a unit resource and that corresponds to the second power aggregation capability is equal to the maximum transmit power that is on a unit resource and that corresponds to the first power aggregation capability. When the quantity of pieces of indication information that is received by the second apparatus and that indicates to increase the power aggregation capability of the first apparatus reaches the second threshold later, the second apparatus increases the power aggregation capability of the first apparatus by a specific step. An example in which the second threshold is 5 is used. In this case, when the second apparatus receives every five pieces of indication information indicating to increase the power aggregation capability of the first apparatus, the second apparatus increases the power aggregation capability of the first apparatus once.

In another implementation method, if the feedback information includes the indication information and the indication information indicates to decrease the power aggregation capability of the first apparatus, the second apparatus may decrease the power aggregation capability of the first apparatus by a specific step, for example, decrease by 0.1 dB. Therefore, a maximum transmit power that is on a unit resource and that corresponds to a decreased second power aggregation capability is less than the maximum transmit power that is on a unit resource and that corresponds to the first power aggregation capability. Alternatively, the second apparatus may not adjust the power aggregation capability of the first apparatus before a quantity of pieces of received indication information indicating to decrease the power aggregation capability of the first apparatus reaches a second threshold. In this case, a maximum transmit power that is on a unit resource and that corresponds to the second power aggregation capability is equal to the maximum transmit power that is on a unit resource and that corresponds to the first power aggregation capability. When the quantity of pieces of indication information that is received by the second apparatus and that indicates to decrease the power aggregation capability of the first apparatus reaches the second threshold later, the second apparatus decreases the power aggregation capability of the first apparatus by a specific step. An example in which the second threshold is 5 is used. In this case, when the second apparatus receives every five pieces of indication information indicating to decrease the power aggregation capability of the first apparatus, the second apparatus decreases the power aggregation capability of the first apparatus once.

The foregoing provides the different implementation methods for adjusting the power aggregation capability of the first apparatus by the second apparatus. During actual application, adjustment is not limited to the foregoing methods. For example, two or three of the status information, the indicator information, and the indication information may alternatively be combined to determine whether to adjust and how to adjust the power aggregation capability of the first apparatus.

In an implementation method, if both the first data and the second data are data of a first service, the second apparatus may further establish a correspondence between the second power aggregation capability and characteristic information of the first service based on the characteristic information of the first service. The characteristic information of the first service includes one or more of the following: a distribution characteristic of data of the first service in frequency domain, or a power distribution corresponding to data of the first service. For example, after the second apparatus adjusts the power aggregation capability of the first apparatus for a plurality of times, feedback information received for N consecutive times (N is an integer greater than or equal to 1) all indicates that the working status of the first apparatus is normal, and feedback information received for an (N+1)^{th} time indicates that the working status of the first apparatus is alarm. In this case, the second apparatus may record a power aggregation capability (for example, the second power aggregation capability) corresponding to feedback information received for an N^{th} time, and specifically, record the correspondence between the second power aggregation capability and the characteristic information of the first service. When sending the data of the first service later, the second apparatus obtains a corresponding power aggregation capability (that is, the second power aggregation capability) of the first apparatus based on the characteristic information of the first service, and then sends the data of the first service by using the second power aggregation capability, with no need to dynamically adjust the power aggregation capability of the first apparatus according to the foregoing solutions of this application. This can bring about the following benefits: First, power consumption and resource overheads caused by dynamic adjustment are reduced for the first apparatus and the second apparatus; and second, service life shortening or even damage resulting from frequent alarms caused by dynamic adjustment can be prevented for the first apparatus.

In the foregoing solutions, the power aggregation capability of the first apparatus is dynamically adjusted based on the feedback information of the first apparatus, so that the power aggregation capability of the first apparatus can be determined properly. This helps improve utilization of the transmit power of the first apparatus while ensuring that the first apparatus works properly.

FIG. 4 is a diagram of an example of a power distribution in a case of power aggregation according to an embodiment of this application. Compared with FIG. 2(c), in the example in FIG. 4, a maximum transmit power *Pₘₐₓ* for sending signals (or data) on each RE by a first apparatus is increased from 2 × *P_{base}* to 4 × *Pₕₐₛₑ.* Alternatively, it is understood as a further increase of 3 dB in a power aggregation capability based on FIG. 2(c). To be specific, before adjustment, a power aggregation capability (that is, a first power aggregation capability) of the first apparatus is 3 dB; and after adjustment, a power aggregation capability (that is, a second power aggregation capability) of the first apparatus is 6 dB.

It can be understood that, to implement the functions in the foregoing embodiments, the first apparatus or the second apparatus includes corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

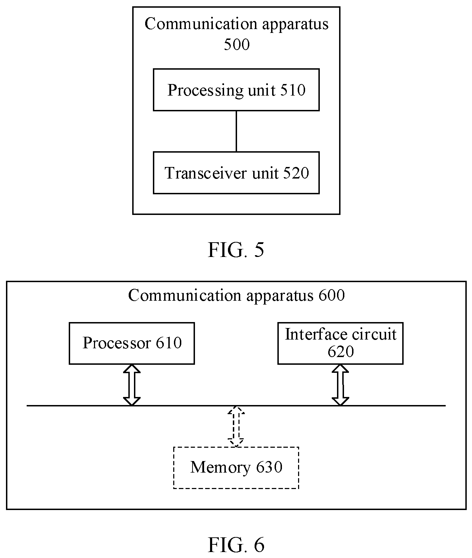

FIG. 5 and FIG. 6 are diagrams of structures of possible communication apparatuses according to embodiments of this application. These communication apparatuses may be configured to implement the functions of the first apparatus or the second apparatus in the foregoing method embodiments, and therefore can also achieve the beneficial effects of the foregoing method embodiments. In embodiments of this application, the communication apparatus may be the first apparatus or the second apparatus shown in FIG. 1(c).

The communication apparatus 500 shown in FIG. 5 includes a processing unit 510 and a transceiver unit 520. The communication apparatus 500 is configured to implement the functions of the first apparatus or the second apparatus in the foregoing method embodiments.

When the communication apparatus 500 is configured to implement the functions of the second apparatus in the foregoing method embodiments, the processing unit 510 is configured to send first data to the first apparatus based on a first power aggregation capability of the first apparatus by using the transceiver unit 520; the transceiver unit 520 is further configured to receive feedback information from the first apparatus; and the processing unit 510 is further configured to send second data to the first apparatus based on a second power aggregation capability of the first apparatus by using the transceiver unit 520, where the second power aggregation capability is determined based on the feedback information and the first power aggregation capability.

In a possible implementation method, the transceiver unit 520 is further configured to receive the first power aggregation capability from the first apparatus, where the first power aggregation capability is an initial power aggregation capability of the first apparatus.

In a possible implementation method, the first power aggregation capability is a default initial power aggregation capability of the first apparatus.

In a possible implementation method, the feedback information includes at least one of the following information:
status information of the first apparatus, where the status information indicates a working status of the first apparatus;
indicator information of the first apparatus, where the indicator information includes at least one of a missed clipping rate in CFR, a DPD convergence status, or an EVM value; or
indication information, where the indication information indicates to increase or decrease a power aggregation capability of the first apparatus.

In a possible implementation method, if the feedback information includes the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or if the feedback information includes the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

In a possible implementation method, if the feedback information includes the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or if the feedback information includes the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, where the first condition includes at least one of the following: the missed clipping rate in CFR is less than a missed clipping rate threshold, the DPD convergence status is converged, or the EVM value is less than an EVM threshold.

In a possible implementation method, if the feedback information includes the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or if the feedback information includes the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

In a possible implementation method, the processing unit 510 is further configured to: if both the first data and the second data are data of a first service, establish, based on characteristic information of the first service, a correspondence between the second power aggregation capability and the characteristic information.

In a possible implementation method, the characteristic information of the first service includes one or more of the following: a distribution characteristic of data of the first service in frequency domain, or a power distribution corresponding to data of the first service.

In a possible implementation method, the feedback information is received based on a periodicity or received based on event-based triggering.

When the communication apparatus 500 is configured to implement the functions of the first apparatus in the foregoing method embodiments, the transceiver unit 520 is configured to: receive first data from the second apparatus, where the first data corresponds to a first power aggregation capability of the first apparatus; and send feedback information to the second apparatus, where the feedback information reflects a working status of the first apparatus when a power aggregation capability of the first apparatus is the first power aggregation capability.

In a possible implementation method, the transceiver unit 520 is further configured to send the first power aggregation capability to the second apparatus, where the first power aggregation capability is an initial power aggregation capability of the first apparatus.

In a possible implementation method, the first power aggregation capability is a default initial power aggregation capability of the first apparatus.

In a possible implementation method, the transceiver unit 520 is further configured to receive second data from the second apparatus, where the second data corresponds to a second power aggregation capability of the first apparatus, and the second power aggregation capability is determined based on the feedback information and the first power aggregation capability.

In a possible implementation method, the feedback information includes at least one of the following information:
status information of the first apparatus, where the status information indicates the working status of the first apparatus;
indicator information of the first apparatus, where the indicator information includes at least one of a missed clipping rate in CFR, a DPD convergence status, or an EVM value; or
indication information, where the indication information indicates to increase or decrease the power aggregation capability of the first apparatus.

In a possible implementation method, if the feedback information includes the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or if the feedback information includes the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

In a possible implementation method, if the feedback information includes the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or if the feedback information includes the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, where the first condition includes at least one of the following: the missed clipping rate in CFR is less than a missed clipping rate threshold, the DPD convergence status is converged, or the EVM value is less than an EVM threshold.

In a possible implementation method, if the feedback information includes the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or if the feedback information includes the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

In a possible implementation method, the transceiver unit 520 is specifically configured to: send the feedback information to the second apparatus when start time of each period arrives.

In a possible implementation method, the transceiver unit 520 is specifically configured to: send the feedback information to the second apparatus when the working status of the first apparatus changes.

For more detailed descriptions about the processing unit 510 and the transceiver unit 520, directly refer to related descriptions in the foregoing method embodiments. Details are not described herein again.

The communication apparatus 600 shown in FIG. 6 includes a processor 610 and an interface circuit 620. The processor 610 and the interface circuit 620 are coupled to each other. It can be understood that the interface circuit 620 may be a transceiver or an input/output interface. Optionally, the communication apparatus 600 may further include a memory 630, configured to: store instructions executed by the processor 610, store input data needed by the processor 610 to run instructions, or store data generated after the processor 610 runs instructions.

When the communication apparatus 600 is configured to implement the foregoing method embodiments, the processor 610 is configured to implement the functions of the processing unit 510, and the interface circuit 620 is configured to implement the functions of the transceiver unit 520.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well known in the art. For example, a storage medium is coupled to the processor, so that the processor can read information from the storage medium and write information into the storage medium. Certainly, the storage medium may alternatively be a constituent part of the processor. The processor and the storage medium may be located in an ASIC. In addition, the ASIC may be located in the first apparatus or the second apparatus. Certainly, the processor and the storage medium may alternatively exist in the first apparatus or the second apparatus as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and runs on a target architecture. When the computer program or instructions are loaded and executed on a computer, all or some of the procedures or functions described in embodiments of this application are performed. The computer may be a general-purpose computer, a dedicated computer, a computer network, or another programmable apparatus. The computer program or instructions may be stored in a computer-readable storage medium, or be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage medium: a volatile storage medium and a non-volatile storage medium.

In embodiments of this application, unless otherwise stated and unless there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between associated objects; and in the formulas in this application, the character "/" indicates a "division" relationship between associated objects.

It can be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
sending first data to a first apparatus based on a first power aggregation capability of the first apparatus;
receiving feedback information from the first apparatus; and
sending second data to the first apparatus based on a second power aggregation capability of the first apparatus, wherein the second power aggregation capability is determined based on the feedback information and the first power aggregation capability.

2. The method according to claim 1, wherein the method further comprises:
receiving the first power aggregation capability from the first apparatus, wherein the first power aggregation capability is an initial power aggregation capability of the first apparatus.

3. The method according to claim 1, wherein the first power aggregation capability is a default initial power aggregation capability of the first apparatus.

4. The method according to any one of claims 1 to 3, wherein the feedback information comprises at least one of the following information:
status information of the first apparatus, wherein the status information indicates a working status of the first apparatus;
indicator information of the first apparatus, wherein the indicator information comprises at least one of a missed clipping rate for crest factor reduction, a digital predistortion convergence status, or an error vector magnitude value; or
indication information, wherein the indication information indicates to increase or decrease a power aggregation capability of the first apparatus.

5. The method according to claim 4, wherein
if the feedback information comprises the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or
if the feedback information comprises the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

6. The method according to claim 4, wherein
if the feedback information comprises the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or
if the feedback information comprises the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, wherein
the first condition comprises at least one of the following: the missed clipping rate for crest factor reduction is less than a missed clipping rate threshold, the digital predistortion convergence status is converged, or the error vector magnitude value is less than an error vector magnitude threshold.

7. The method according to claim 4, wherein
if the feedback information comprises the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or
if the feedback information comprises the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

8. The method according to any one of claims 1 to 7, wherein the method further comprises:
if both the first data and the second data are data of a first service, establishing, based on characteristic information of the first service, a correspondence between the second power aggregation capability and the characteristic information.

9. The method according to claim 8, wherein the characteristic information of the first service comprises one or more of the following:
a distribution characteristic of data of the first service in frequency domain, or a power distribution corresponding to data of the first service.

10. The method according to any one of claims 1 to 9, wherein the feedback information is received periodically or received based on event-based triggering.

11. A communication method, comprising:
receiving first data from a second apparatus, wherein the first data corresponds to a first power aggregation capability of a first apparatus; and
sending feedback information to the second apparatus, wherein the feedback information reflects a working status of the first apparatus when a power aggregation capability of the first apparatus is the first power aggregation capability.

12. The method according to claim 11, wherein the method further comprises:
sending the first power aggregation capability to the second apparatus, wherein the first power aggregation capability is an initial power aggregation capability of the first apparatus.

13. The method according to claim 11, wherein the first power aggregation capability is a default initial power aggregation capability of the first apparatus.

14. The method according to any one of claims 11 to 13, wherein the method further comprises:
receiving second data from the second apparatus, wherein the second data corresponds to a second power aggregation capability of the first apparatus, and the second power aggregation capability is determined based on the feedback information and the first power aggregation capability.

15. The method according to claim 14, wherein the feedback information comprises at least one of the following information:
status information of the first apparatus, wherein the status information indicates the working status of the first apparatus;
indicator information of the first apparatus, wherein the indicator information comprises at least one of a missed clipping rate for crest factor reduction, a digital predistortion convergence status, or an error vector magnitude value; or
indication information, wherein the indication information indicates to increase or decrease the power aggregation capability of the first apparatus.

16. The method according to claim 15, wherein
if the feedback information comprises the status information and the status information indicates that the working status of the first apparatus is normal, a maximum transmit power that is on a unit resource and that corresponds to the second power aggregation capability is greater than or equal to a maximum transmit power that is on a unit resource and that corresponds to the first power aggregation capability; or
if the feedback information comprises the status information and the status information indicates that the working status of the first apparatus is alarm, a maximum transmit power that is on a unit resource and that corresponds to the second power aggregation capability is less than or equal to a maximum transmit power that is on a unit resource and that corresponds to the first power aggregation capability.

17. The method according to claim 15, wherein
if the feedback information comprises the indicator information and the indicator information meets a first condition, a maximum transmit power that is on a unit resource and that corresponds to the second power aggregation capability is greater than or equal to a maximum transmit power that is on a unit resource and that corresponds to the first power aggregation capability; or
if the feedback information comprises the indicator information and the indicator information does not meet a first condition, a maximum transmit power that is on a unit resource and that corresponds to the second power aggregation capability is less than or equal to a maximum transmit power that is on a unit resource and that corresponds to the first power aggregation capability, wherein
the first condition comprises at least one of the following: the missed clipping rate for crest factor reduction is less than a missed clipping rate threshold, the digital predistortion convergence status is converged, or the error vector magnitude value is less than an error vector magnitude threshold.

18. The method according to claim 15, wherein
if the feedback information comprises the indication information and the indication information indicates to increase the power aggregation capability of the first apparatus, a maximum transmit power that is on a unit resource and that corresponds to the second power aggregation capability is greater than or equal to a maximum transmit power that is on a unit resource and that corresponds to the first power aggregation capability; or
if the feedback information comprises the indication information and the indication information indicates to decrease the power aggregation capability of the first apparatus, a maximum transmit power that is on a unit resource and that corresponds to the second power aggregation capability is less than or equal to a maximum transmit power that is on a unit resource and that corresponds to the first power aggregation capability.

19. The method according to any one of claims 11 to 18, wherein sending the feedback information to the second apparatus comprises:
when start time of each period arrives, sending the feedback information to the second apparatus.

20. The method according to any one of claims 11 to 18, wherein sending the feedback information to the second apparatus comprises:
when the working status of the first apparatus changes, sending the feedback information to the second apparatus.

21. A communication apparatus, comprising a module configured to perform the method according to any one of claims 1 to 10, or configured to perform the method according to any one of claims 11 to 20.

22. A communication apparatus, comprising a processor coupled to a memory, wherein the processor is configured to invoke a program stored in the memory, to perform the method according to any one of claims 1 to 10, or to perform the method according to any one of claims 11 to 20.

23. A communication apparatus, comprising a processor and a memory, wherein the memory is configured to store computer instructions, and when the communication apparatus runs, the processor executes the computer instructions stored in the memory, to perform the method according to any one of claims 1 to 10, or to perform the method according to any one of claims 11 to 20.

24. A communication apparatus, comprising a processor and an interface circuit, wherein the processor is configured to: communicate with another apparatus through the interface circuit, and perform the method according to any one of claims 1 to 10 or perform the method according to any one of claims 11 to 20.

25. A computer program product, wherein the computer program product comprises a computer program or instructions, and when the computer program or the instructions are run on a processor, the processor is enabled to perform the method according to any one of claims 1 to 10, or perform the method according to any one of claims 11 to 20.

26. A computer-readable storage medium, wherein the storage medium stores a computer program or instructions, and when the computer program or the instructions are executed by a communication apparatus, the method according to any one of claims 1 to 10 is implemented, or the method according to any one of claims 11 to 20 is implemented.

27. A communication system, comprising a second apparatus configured to perform the method according to any one of claims 1 to 10, and a first apparatus configured to perform the method according to any one of claims 11 to 20.
